(19) Europäisches Patentamt
European Patent Office
Office européen des brevets

(11) **EP 2 950 083 B1**

(12) **EUROPEAN PATENT SPECIFICATION**

(45) Date of publication and mention
of the grant of the patent:
**25.01.2023 Bulletin 2023/04**

(51) International Patent Classification (IPC):
**G01N 21/84** *(2006.01)*    **G01N 21/27** *(2006.01)*
**G01J 3/28** *(2006.01)*    **G01J 3/42** *(2006.01)*

(21) Application number: **14743027.6**

(52) Cooperative Patent Classification (CPC):
**G01N 21/8483; G01J 3/28; G01J 3/42; G01N 21/274**

(22) Date of filing: **20.01.2014**

(86) International application number:
**PCT/JP2014/050903**

(87) International publication number:
**WO 2014/115664 (31.07.2014 Gazette 2014/31)**

(54) **CALIBRATION METHOD, DEVICE, AND PROGRAM, AND BODILY-FLUID COMPONENT MEASUREMENT DEVICE CALIBRATED USING SAID METHOD**

KALIBRIERVERFAHREN, VORRICHTUNG UND PROGRAMM SOWIE MIT DIESEM VERFAHREN KALIBRIERTE VORRICHTUNG ZUR MESSUNG VON KÖRPERFLÜSSIGKEITSKOMPONENTEN

PROCÉDÉ, DISPOSITIF, ET PROGRAMME D'ÉTALONNAGE, ET DISPOSITIF DE MESURE DE COMPOSANT DE FLUIDE CORPOREL ÉTALONNÉ AU MOYEN DUDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2013   JP 2013010615**

(43) Date of publication of application:
**02.12.2015   Bulletin 2015/49**

(73) Proprietor: **Terumo Kabushiki Kaisha**
**Tokyo 151-0072 (JP)**

(72) Inventor: **AIKAWA, Ryokei**
**Ashigarakami-gun, Kanagawa 259-0151 (JP)**

(74) Representative: **Casalonga**
**Casalonga & Partners**
**Bayerstraße 71/73**
**80335 München (DE)**

(56) References cited:
**WO-A1-96/24832**       **WO-A1-2009/123069**
**WO-A1-2012/128014**    **JP-A- 2001 324 386**
**JP-A- 2009 053 116**   **JP-A- 2010 045 615**
**JP-A- 2012 004 775**   **JP-A- 2013 096 726**
**US-A- 5 459 677**      **US-A1- 2005 203 353**

**EP 2 950 083 B1**

**Description**

Technical Field

The present invention relates to a method, an apparatus, and a program for calibrating a body fluid component measuring instrument for measuring a component in the body fluid based on a detection value related to the reflected light obtained by projecting light on a test strip that contains a chromogenic reagent that reacts with the component in the body fluid, and also relates to a body fluid component measuring instrument calibrated by using the same method.

Background Art

US 2005/0203353 relates to a quick, multiple functional, and on-site measurement, analysis and diagnosis method and apparatus that satisfies these stated needs.

There has been known a blood glucose meter capable of measuring a blood glucose level of a subject as an embodiment of a body fluid component measuring instrument for measuring a component in a body fluid. For example, an optical blood glucose meter is configured to supply blood to a test strip impregnated with a reagent that develops color corresponding to the amount of glucose in the blood and to optically detect a property of the test strip so as to calculate the blood glucose level.

JP 9-145615 A discloses an instrument that has an optical system (hereinafter, referred to as a measurement optical system) that includes a light source for projecting light on a measurement surface of the test strip and a sensor for detecting the reflected light.

Summary of Invention

In manufacturing the instrument disclosed in the above-described JP 9-145615 A, no small amount of individual variation exists in a spectral characteristic of the measurement optical system to be mounted, particularly in a spectral characteristic of the light source. If an actual spectral characteristic significantly deviates from a typical characteristic, for example, it may not be possible to obtain desired measurement accuracy. Therefore, in order to ensure measurement accuracy, it is sometimes required to perform a calibration operation that appropriately associates a detection value obtained by the measurement optical system with a measurement result on the component. The operation is enabled by using a calibration target instrument to measure a sample that has a known test strip property, and then by correcting the obtained detection result.

In order to manage measurement accuracy more precisely, however, operations such as measurement/exchange of the sample would be needed for each instrument, increasing more time and processes for the calibration operation. As a result, there has been a problem of increased manufacturing costs. Another problem is a necessity of ensuring invariance of the sample, undesirable from a standpoint of management.

The present invention is intended to solve the above-described problem. The object of the present invention is to provide a method, an apparatus, and a program for calibration capable of ensuring accuracy of measuring a component in a body fluid without performing operations such as measurement/exchange of the sample even when individual variation exists in a spectral characteristic of a light source in particular, and to provide a body fluid component measuring instrument calibrated by using the above method.

Solutions are provided according to the calibration method of claim 1, the calibration apparatus of claim 4, and the calibration program of claim 5.

The present invention includes a calibration method for calibrating a body fluid component measuring instrument configured to measure a component in a body fluid based on a detection value related to reflected light obtained by projecting light on a test strip containing a chromogenic reagent that reacts with the component in the body fluid. The calibration method includes: an acquisition step of acquiring a spectral reflection characteristic of each of a plurality of samples prepared by using the test strip; a reference estimation step of estimating a reference detection value, that is, a detection value on each of the samples when a reference light source is used, based on a spectral radiation characteristic of the reference light source that is a reference for a light source to be mounted on the body fluid component measuring instrument, and based on each of the spectral reflection characteristics obtained; an individual estimation step of estimating an individual detection value, that is, a detection value on each of the samples when an individual light source is used, based on a spectral radiation characteristic of the individual light source that is the same type as the reference light source and that is to be mounted on a calibration target instrument, namely, the body fluid component measuring instrument, and based on each of the spectral reflection characteristics obtained; and a determination step of determining a calibration curve by which the detection value obtained on the test strip on the calibration target instrument having the individual light source mounted thereon is converted into the detection value when the reference light source is used, based on a relationship in each combination between the reference detection value and the individual detection value

estimated for each of the samples, whereby further essential technical features are defined in claim 1.

As described above, an individual detection value, that is, a detection value on each of the samples when an individual light source is used is estimated based on the spectral radiation characteristic of the individual light source to be mounted on a calibration target instrument, and based on each spectral reflection characteristic obtained. Therefore, the detection value can be obtained without performing an operation of mounting the individual light source, measurement/exchange of the sample, or the like. Based on a relationship in each combination between the reference detection value and the individual detection value estimated for each of the samples, a calibration curve is determined. With the calibration curve, the detection value on the test strip on the calibration target instrument having the individual light source mounted thereon is converted into the detection value when the reference light source is used. Accordingly, a detection value when the reference light source is used can always be obtained regardless of the spectral characteristic of the individual light source. Consequently, accuracy of measuring a component in a body fluid can be ensured without performing operations such as measurement/exchange of the sample for each instrument, even when an individual variation exists in a spectral characteristic of the light source.

Furthermore, the acquisition step preferably acquires the spectral reflection characteristic across a wavelength range including an emission wavelength range of the reference light source and of the individual light source. This improves accuracy of estimating a detection value on each of the samples.

The body fluid component measuring instrument preferably measures the component in the body fluid by using, as the detection value, a ratio of detection light quantities on the test strip between before and after color development. The reference estimation step preferably estimates each of the detection light quantities before and after color development by integrating, for each wavelength, a spectral characteristic each proportional to a spectral radiation characteristic of the reference light source, each of the spectral reflection characteristics, and a light sensitivity characteristic of the calibration target instrument. The individual estimation step preferably estimates each of the detection light quantities before and after color development by integrating, for each wavelength, a spectral characteristic each proportional to a spectral radiation characteristic of the individual light source, each of the spectral reflection characteristics, and the light sensitivity characteristic. As described above, by considering the spectral radiation characteristic, each of the spectral reflection characteristics, and the light sensitivity characteristic all together, the spectral characteristic of the measurement optical system can be expressed more precisely, making it possible to further improve accuracy of estimating the detection value on each of the sample.

The determination step preferably determines the calibration curve by fitting, each combination of the reference detection value and the individual detection value, estimated for each of the samples, to a predetermined function.

The calibration apparatus according to the present invention is an apparatus configured to calibrate a body fluid component measuring instrument configured to measure a component in a body fluid based on a detection value related to reflected light obtained by projecting light on a test strip containing a chromogenic reagent that reacts with the component in the body fluid. The calibration apparatus includes: a spectral characteristic acquisition section configured to acquire a spectral radiation characteristic of a reference light source that is a reference for a light source to be mounted on the body fluid component measuring instrument, a spectral radiation characteristic of an individual light source that is the same type as the reference light source and that is to be mounted on a calibration target instrument, namely, the body fluid component measuring instrument, and a spectral reflection characteristic of a plurality of samples prepared by using the test strip; a detection value estimation section configured to estimate a reference detection value, that is, a detection value on each of the samples when the reference light source is used, based on the spectral radiation characteristic and each of the spectral reflection characteristics of the reference light source, each obtained by the spectral characteristic acquisition section, and also configured to estimate an individual detection value, that is, a detection value on each of the samples when the individual light source is used, based on the spectral radiation characteristic and each of the spectral reflection characteristics of the individual light source, each obtained by the spectral characteristic acquisition section; and a calibration curve determination section configured to determine a calibration curve by which a detection value on the test strip obtained on the calibration target instrument having the individual light source mounted thereon is converted into the detection value when the reference light source is used, based on a relationship in each combination between the reference detection value and the individual detection value, estimated for each of the samples by the detection value estimation section, whereby further essential technical features are defined in claim 4.

A calibration program according to the present invention is configured to cause steps to be executed by a calibration apparatus for calibrating a body fluid component measuring instrument configured to measure a component in a body fluid based on a detection value related to reflected light obtained by projecting light on a test strip containing a chromogenic reagent that reacts with the component in the body fluid. The steps include: an acquisition step of acquiring a spectral reflection characteristic of each of a plurality of samples prepared by using the test strip; a reference estimation step of estimating a reference detection value, that is, a detection value on each of the samples when a reference light source is used, based on the spectral radiation characteristic of the reference light source that is a reference for a light source to be mounted on the body fluid component measuring instrument, and based on each of the spectral reflection characteristics obtained; an individual estimation step of estimating an individual detection value, that is, a detection value on each of the samples when an individual light source is used, based on the spectral radiation characteristic of the individual light source that is the same type as the reference light source and that is to be mounted on a calibration target instrument, namely, the body fluid component measuring instrument as a calibration target, and based on each of the spectral reflection characteristics obtained; and a determination step of determining a calibration curve by which the detection value on the test strip obtained on the calibration target instrument having the individual light source mounted thereon is converted into the detection value when the reference light source is used, based on a relationship in each combination between the reference detection value and the individual detection value estimated for each of the samples, whereby further essential technical features are defined in claim 5.

A storage medium outside of the scope of the present invention is non-transitory and computer-readable, and stores the above-stated calibration program.

A body fluid component measuring instrument is calibrated by using any of the above-described calibration methods.

The body fluid component measuring instrument preferably includes a storage unit configured to store a calibration coefficient that specifies the determined calibration curve, and a component quantification section configured to convert a detection value on the test strip by using the calibration curve specified by the calibration coefficient read from the storage unit and then to quantify the component in the body fluid based on a quantitative equation corresponding to the reference light source. Consequently, there is no need to prepare a different quantitative equation for each spectral characteristic of the individual light source, making it possible to simplify a computation process for quantification.

With the method, apparatus, and program for calibration according to the present invention, an individual detection value, that is, a detection value on each of the samples when an individual light source is used is estimated based on the spectral radiation characteristic of the individual light source to be mounted on a calibration target instrument, and based on each of the spectral reflection characteristics obtained. Therefore, the detection value can be obtained without performing an operation of mounting the individual light source, measurement/exchange of the sample, or the like. Furthermore, based on a relationship in each combination between the reference detection value and the individual detection value estimated for each of the samples, a calibration curve is determined. With the calibration curve, the detection value on the test strip on the calibration target instrument having the individual light source mounted thereon is converted into the detection value when the reference light source is used. Accordingly, a detection value when the reference light source is used can always be obtained regardless of the spectral characteristic of the individual light source. Consequently, accuracy of measuring a component in a body fluid can be ensured without performing operations such as measurement/exchange of the sample for each instrument, even when an individual variation exists in the spectral characteristic of the light source.

Brief Description of Drawings

FIG. 1 is a perspective view of a blood glucose meter as a body fluid component measuring instrument
FIG. 2 is a schematic block diagram of the blood glucose meter illustrated in FIG. 1.
FIG. 3 is an electrical block diagram of a calibration system for calibrating the blood glucose meter illustrated in FIG. 1.
FIG. 4A is a graph illustrating an exemplary spectral radiation characteristic of an LED light source. FIG. 4B is a graph illustrating an exemplary spectral radiation characteristic of a halogen light source.
FIG. 5 is a flowchart illustrating an operation of the calibration system illustrated in FIG. 3.
FIG. 6 is a graph illustrating an exemplary spectral reflection characteristic of a test strip and a sample before color development.
FIG. 7 is a graph illustrating an exemplary light sensitivity characteristic of a PD device.
FIG. 8A is a graph illustrating an exemplary spectral radiation characteristic of a reference halogen light source.
FIG. 8B is a graph illustrating an exemplary energy conversion coefficient for a reference halogen light source.
FIG. 9 is a graph illustrating an exemplary spectral detection characteristic of a test strip or a sample before color development.
FIG. 10 is a graph illustrating an exemplary calibration curve.
FIG. 11 is a graph illustrating an exemplary quantification curve.

Description of Embodiments

Hereinafter, a method, an apparatus, and a program for calibration, according to the present invention, will now be described with preferred embodiments and attached drawings.

[Configuration of Blood Glucose Meter 10]

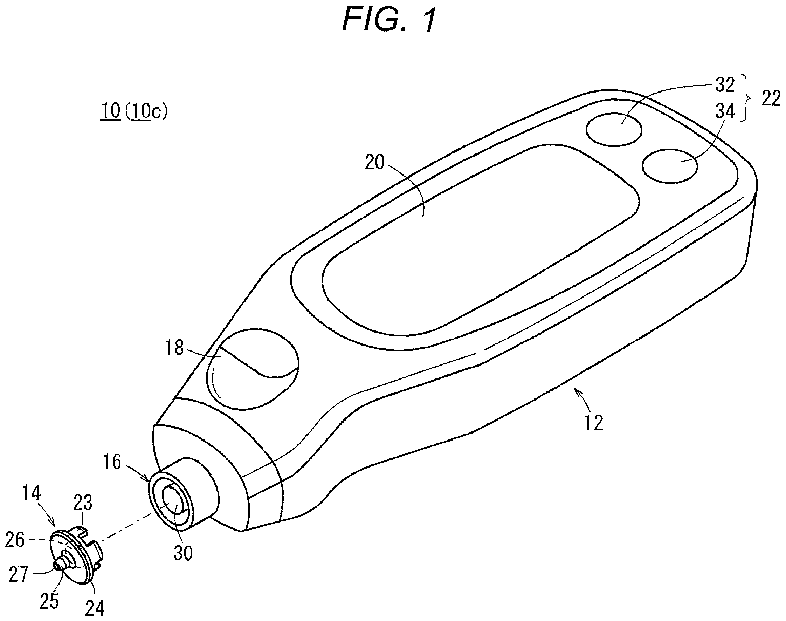

FIG. 1 is a perspective view of a blood glucose meter 10 as a body fluid component measuring instrument

The blood glucose meter 10 includes a body 12, a tip attachment section 16 to which a tip 14 is attached, an ejector 18 provided on an upper surface near the tip attachment section 16, a liquid crystal panel 20 provided at a center of an upper surface of the body 12, and an operation section 22 provided at a proximal end on the upper surface of the body 12.

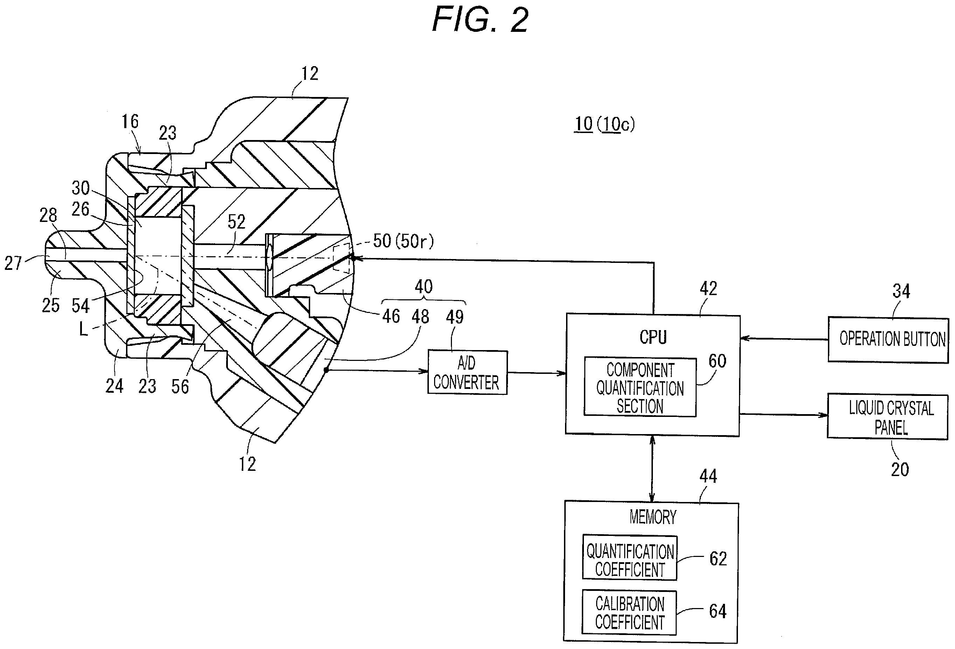

At a leading end of the blood glucose meter 10, the tip 14 as a test device is attached. The tip 14 includes a base cylinder 23 of a bottomed-cylindrical shape, a flange 24 protruding from the base cylinder 23 in a radially outward direction, a nozzle 25 protruding from a base section of the base cylinder 23, and a test strip 26 provided at an inner bottom surface of the base cylinder 23. At a center of the nozzle 25, a linear blood guide passage 28 (FIG. 2) is provided, passing from a spotting section 27 at the leading end through the test strip 26.

As a material of the test strip 26, polyether sulfone is used, for example. Examples of chromogenic reagents to be impregnated on the test strip 26 include color developers such as glucose oxidase (GOD), peroxidase (POD), 4-aminoantipyrine, N-ethyl-N-(2-hydroxy-3-sulfopropyl). The reagent may include a predetermined buffer agent.

The body 12 of the blood glucose meter 10 has an elongated shape easily gripped with one hand by a user. A leading end section of the body tapers toward a leading end and is bent slightly in a lower direction, making it possible to perform a blood spotting operation easily.

The tip attachment section 16 is provided at the leading end section of the blood glucose meter 10 and is configured to be cylindrical such that the above-described tip 14 can be attached thereto. When a user measures a blood glucose level by using the blood glucose meter 10, the tip 14 is attached to the tip attachment section 16, and then, blood is drawn from the spotting section 27 on the leading end of the attached tip 14. At the center of the tip attachment section 16, a measurement window 30 is provided. At a time of a measurement, light projection and light reception are performed by a measurement optical system 40 (FIG. 2) via the measurement window 30.

The ejector 18, in response to a pressing operation in a forward direction, pushes out the attached tip 14 in the forward direction to detach the tip from the tip attachment section 16. As a result, it is possible to discard the tip 14 on which a blood glucose level measurement has been completed.

The liquid crystal panel 20 displays a measured blood glucose level as a measurement result, and can display an operation procedure guide, therapeutic guidance, and information on an error that has been encountered, together with countermeasures for the error, or the like. The operation section 22 has a power button 32 (not illustrated) for turning on/off the power source, and an operation button 34 for performing operations such as setting and inputting of various types of data.

[Schematic Block Diagram of Blood Glucose Meter 10]

FIG. 2 is a schematic block diagram of the blood glucose meter 10 illustrated in FIG. 1. Note that in the left portion of the diagram, a partly enlarged sectional view of the leading end of the blood glucose meter 10 is illustrated.

The blood glucose meter 10 includes, in addition to the liquid crystal panel 20 and the operation button 34, the measurement optical system 40, a central processing unit (hereinafter, referred to as a CPU 42), and a memory 44 (storage unit).

The measurement optical system 40 includes a light projecting section 46 configured to illuminate the test strip 26 with pulsed light, a light receiving section 48 configured to receive reflected light from the test strip 26, and an A/D converter 49 configured to convert an analog signal obtained by photoelectric conversion at the light receiving section 48 into a digital signal.

At the light projecting section 46, a light emitting device 50 that emits light is disposed. Examples of various types of devices that can be used as the light emitting device 50 include: a light emitting diode (LED), an organic electroluminescence (EL) device, an inorganic EL device, and a laser diode (LD) device.

The light receiving section 48 is formed of a light receiving device that converts detected light into an electrical signal. Examples of various types of devices that can be used as the light receiving device include a photodiode (PD) device, a charge coupled device (CCD), and a complementary metal oxide semiconductor (CMOS) device.

The measurement optical system 40 has been optically adjusted such that the light can be guided along a V-shaped optical path L and a light projection region on a measurement surface 54 can be a predetermined shape (a round shape with a diameter of 1 to 3 mm, for example). Accordingly, the light emitted from the light emitting device 50 passes straight through inside a light projecting path 52 to be reflected on the measurement surface 54 of the test strip 26, passing straight through a light receiving path 56 to be received by the light receiving section 48.

The CPU 42, by reading and executing a program stored in the memory 44, or the like, performs an operation for controlling each of components including the measurement optical system 40 and, furthermore, enables functions of a component quantification section 60 that quantifies the blood glucose level based on a signal value output from the A/D converter 49.

The memory 44 is a volatile or non-volatile storage medium. According to the exemplary diagram, a quantification coefficient 62 and a calibration coefficient 64 are each stored in the memory 44. Here, the quantification coefficient 62 is a coefficient for specifying a quantification curve, and the calibration coefficient 64 is a coefficient for specifying a calibration curve.

[Electrical Block Diagram of Calibration System 70]

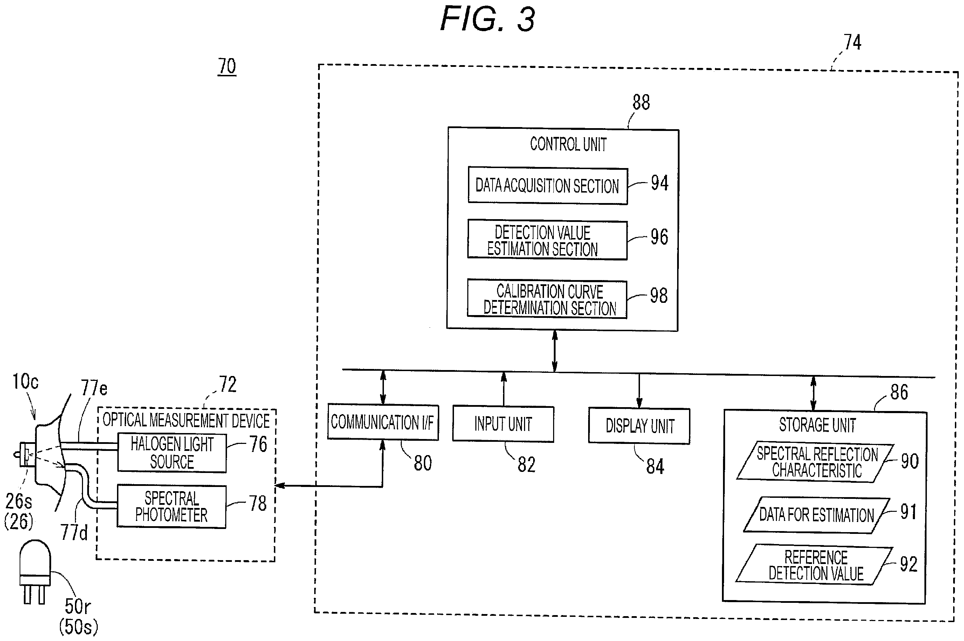

FIG. 3 is an electrical block diagram of a calibration system 70 that calibrates the blood glucose meter 10 illustrated in FIG. 1. The calibration system 70 basically includes an optical measurement device 72 configured to measure a spectral radiation characteristic or a spectral reflection characteristic of the measurement target, and a calibration apparatus 74 configured to calibrate the blood glucose meter 10 (hereinafter, also referred to as a calibration target instrument 10c) as a calibration target, by using a measurement result obtained with the optical measurement device 72.

The optical measurement device 72 includes a halogen light source 76 configured to emit light toward a sample 26s placed on the calibration target instrument 10c, and a spectral photometer 78 configured to measure the spectral characteristic of the reflected light from the sample 26s via optical fibers 77e and 77d.

The calibration apparatus 74 is a computer equipped with a communication I/F 80, an input unit 82, a display unit 84, a storage unit 86 and a control unit 88.

The communication I/F 80 is an interface for transmitting and receiving an electrical signal to/from an external device (the optical measurement device 72 in an example in FIG. 3). The optical measurement device 72 is communicably connected with the calibration apparatus 74 either by wire or wirelessly.

The input unit 82 is configured with various input devices including a mouse, a track ball, and a keyboard. The display unit 84 is a unit capable of monochrome or color display and may be configured with a liquid crystal panel, an organic EL panel, an inorganic EL panel, or the like.

The storage unit 86 stores a program, data, or the like, needed for the control unit 88 to control each component. According to the exemplary diagram, a spectral reflection characteristic 90, data for estimation 91, and a reference detection value 92 are each stored in the storage unit 86. Note that the storage unit 86 may be a non-transitory and computer readable storage medium including a non-volatile memory, and a hard disk.

The control unit 88 is configured with a processor such as a central processing unit (CPU). The control unit 88, by reading and executing a program stored in the storage unit 86, enables each of functions of a data acquisition section 94 (spectral characteristic acquisition section), a detection value estimation section 96, and a calibration curve determination section 98.

[Operation of Calibration System 70]

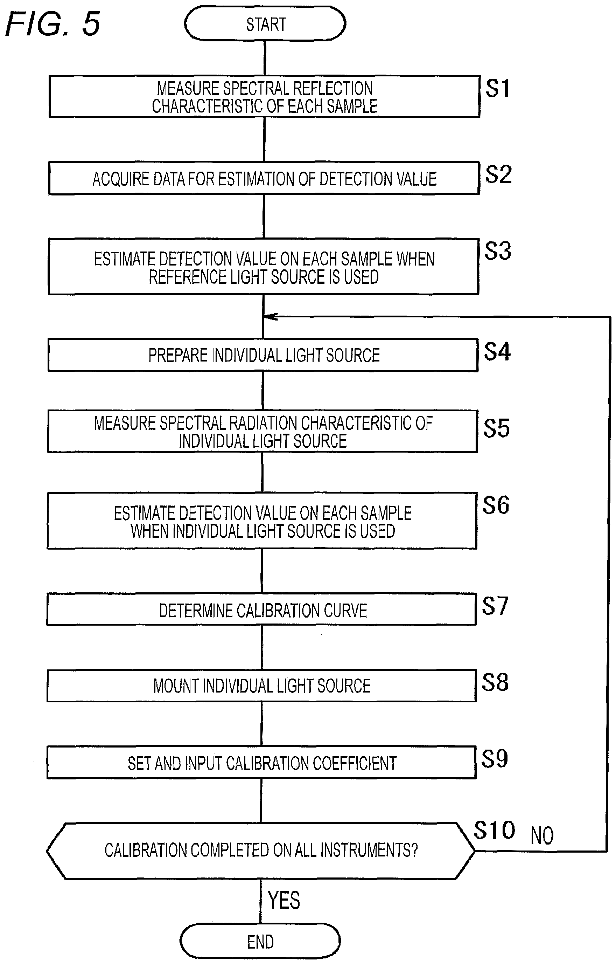

Next, an operation of the calibration system 70 illustrated in FIG. 3 will be described with reference to a flowchart illustrated in FIG. 5. Prior to the description on the operation, the spectral radiation characteristic of the light source that is to be used for measurement will be described.

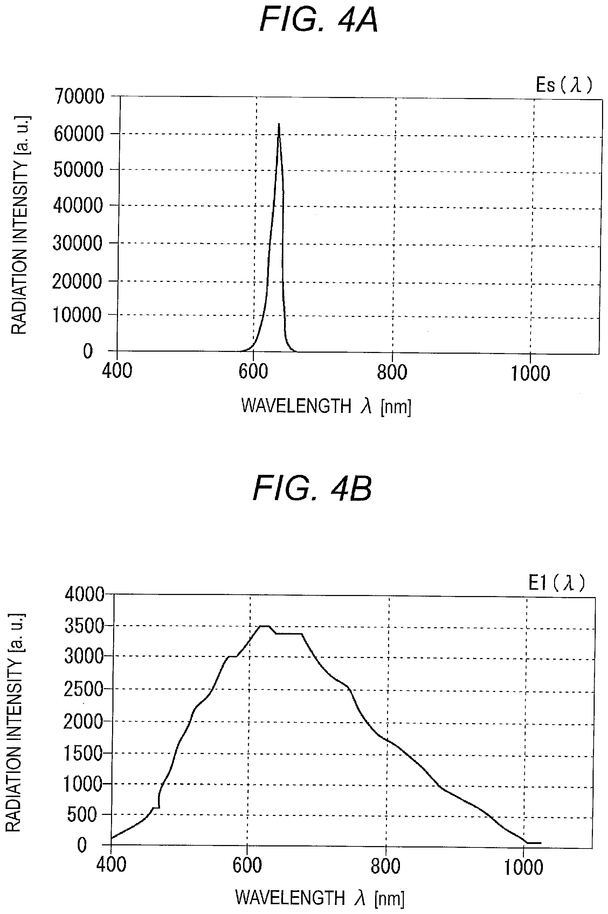

FIG. 4A is a graph illustrating an exemplary spectral radiation characteristic of an LED light source. In the graph, the horizontal axis represents a wavelength $\lambda$ (unit: nm), and the vertical axis represents a radiation intensity (unit: arbitrary). Regarding the graph in FIG. 4B, definition is similar to the above.

The spectral radiation characteristic has a sharp peak around the wavelength $\lambda$ of 630 nm. An emission wavelength range is approximately from 590 to 680 nm, relatively narrow. When using a light source with a narrow emission wavelength range as above, a small variation in peak wavelength and width, if any, causes a relatively large amount of deviation in a measurement result. This may cause a failure in acquiring a desirable measurement accuracy.

FIG. 4B is a graph illustrating an exemplary spectral radiation characteristic of the halogen light source 76. The spectral radiation characteristic has a wide peak around the wavelength $\lambda$ of 615 nm. The emission wavelength range is approximately from 400 to 1000 nm, relatively wide.

At step S1 in FIG. 5, a calibration operator, by using the optical measurement device 72, measures and acquires a spectral reflection characteristic of each of the samples 26s. The calibration operator, by attaching blood having different blood glucose levels to each of the test strips 26, prepares a plurality of samples 26s beforehand. Here, the test strip 26 before color development, and five types of samples 26s corresponding to the blood glucose levels of 50, 100, 250, 400, and 550 (unit of each level: [mg/dl]) are prepared. Note that the number of types of the samples 26s is not limited to five. The total number of the samples 26s can be changed to any number if there are at least two types of samples.

A calibration operator inserts a leading end section of the optical fiber 77e into the light projecting section 46 and inserts a leading end section of the optical fiber 77d into the light receiving section 48. Thereafter, by performing light projection by using the halogen light source 76 and light reception by using the spectral photometer 78 under a condition such that the sample 26s (or the test strip 26 before color development) has been attached to the calibration target instrument 10c, the spectral reflection characteristic of each of the samples 26s (or the test strip 26 before color development) is measured.

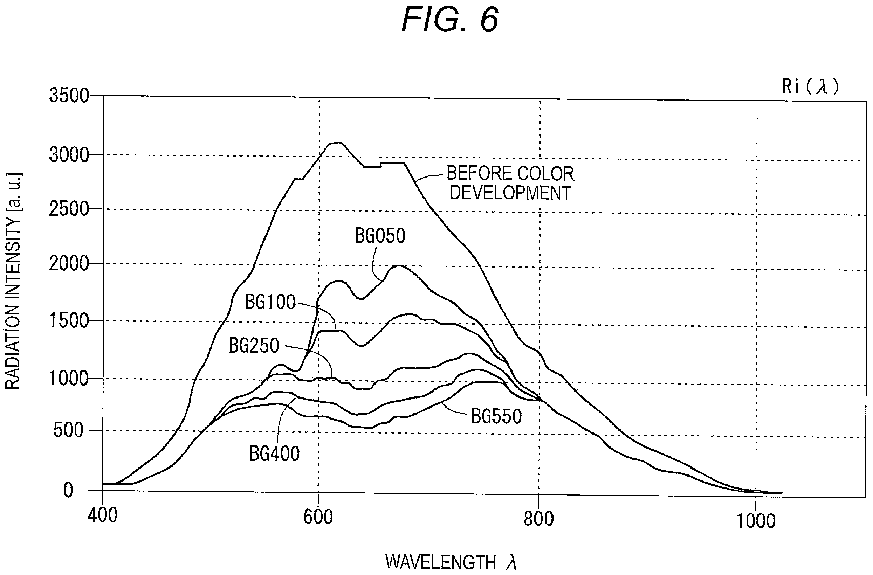

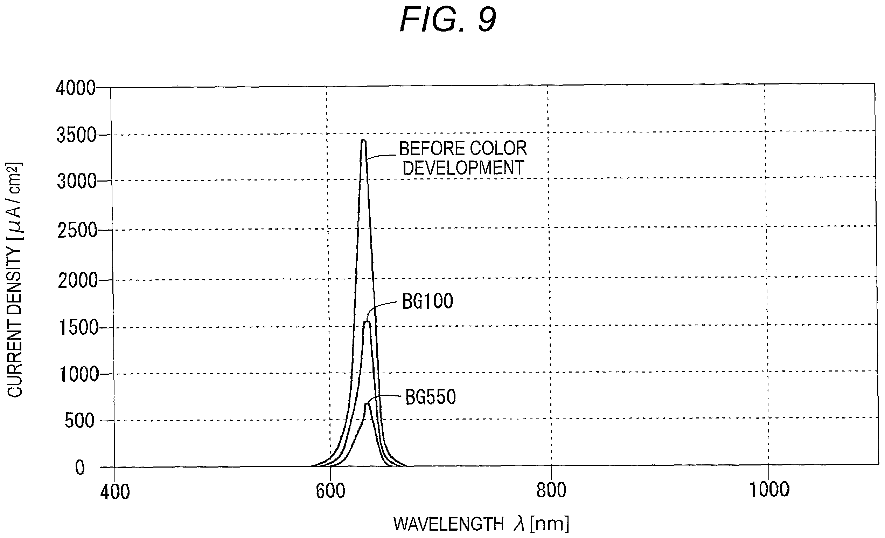

FIG. 6 is a graph illustrating an exemplary spectral reflection characteristic of the test strip 26 and each of the samples 26s before color development. In the graph, the measurement result for the test strip 26 before color development, and the measurement result for each of the samples 26s corresponding to the blood glucose levels of 50, 100, 250, 400, and 550 [mg/dl], are respectively indicated as "before color development", "BG050", "BG100", "BG250", "BG400", and "BG550". The same applies to FIG. 9 described later.

As understandable from the diagram, reflected light intensity (an area enclosed by the graph) is lowered as the blood glucose level is increased. Particularly, the reflected light intensity tends to change within a limited wavelength range of 500 to 800 nm.

Then, spectral data that has been output from the optical measurement device 72 is supplied to the calibration apparatus 74 via the communication I/F 80. Thereafter, the control unit 88 temporarily stores the spectral data as a spectral reflection characteristic 90 in the storage unit 86. Hereinafter, the spectral reflection characteristic of the i-th sample 26s (i = 1 to 5) will be described as $Ri(\lambda)$. For convenience of explanation, the spectral reflection characteristic of the test strip 26 before color development will be described as $R0(\lambda)$.

At step S2, the data acquisition section 94 acquires the data for estimation 91 for estimating a detection value to be described later. The data for estimation 91 may be any of an actual measurement value, a literature value, and a nominal value, and may be, for example: spectral radiation characteristics $E1(\lambda)$, $E2(\lambda)$, $Er(\lambda)$, or $Es(\lambda)$; a light sensitivity characteristic $D(\lambda)$; or an energy conversion coefficient $\varepsilon(\lambda)$. Details of these spectral characteristics will be described later at step S6.

At step S3, the detection value estimation section 96 estimates a detection value (hereinafter, referred to as a reference detection value) for each of the samples 26s when the reference light source 50s is used. Details of the estimation method will be described later at step S6.

The reference light source 50s represents a standard light source as a reference (the light emitting device 50) to be mounted on the blood glucose meter 10. In the present embodiment, the LED light source having the spectral radiation characteristic $Es(\lambda)$ illustrated in FIG. 4A is assumed to be the reference light source 50s.

At step S4, the calibration operator prepares the light emitting device 50 (hereinafter, referred to as an individual light source 50r) to be mounted on the calibration target instrument 10c. Each individual light source 50r is the same kind of light source as the above-described reference light source 50s, and has a characteristic similar to the spectral radiation characteristic $Es(\lambda)$ illustrated in FIG. 4A.

At step S5, a spectral radiation characteristic of the individual light source 50r prepared at step S4 is measured and obtained. The calibration operator measures a spectral reflection characteristic of the individual light source 50r by using a spectral photometer (not illustrated). Then, the output spectral data is supplied to the calibration apparatus 74 via the communication I/F 80. Thereafter, the control unit 88 temporarily stores the spectral data in the storage unit 86. Hereinafter, the spectral radiation characteristic of the individual light source 50r will be described as $Er(\lambda)$.

At step S6, the detection value estimation section 96 estimates a detection value (hereinafter, referred to as an individual detection value) for each of the samples 26s when the individual light source 50r is used. Hereinafter, the estimation method will be described in detail.

The detection value estimation section 96, by integrating the spectral characteristic of the measurement optical system 40 for each wavelength $\lambda$, estimates detection light quantities Ir(i) and Is(i) for before color development and after color development, respectively. Here, Ir(i) is a detection light quantity at the i-th sample 26s when using the individual light source 50r, and is calculated based on the following equation (1). Note that, in equation (1), and in equation (2) to be described later, description of an argument $\lambda$ is omitted.

$$\mathrm{Ir(i)} = \int (\mathrm{Ri/E1})(\varepsilon \cdot \mathrm{Er/E2})\mathrm{Dd}\lambda \ \dots \ (1)$$

Furthermore, Is(i) is a detection light quantity at the i-th sample 26s when the reference light source 50s is used, and is calculated based on the following equation (2).

$$\mathrm{Is(i)} = \int (\mathrm{Ri/E1})(\varepsilon \cdot \mathrm{Es/E2})\mathrm{Dd}\lambda \ \dots \ (2)$$

Note that $\varepsilon(\lambda)$ is the energy conversion coefficient (unit: $\mu W/cm^2/nm$) on a reference halogen light source. Also note that $E2(\lambda)$ is a spectral radiation characteristic of the reference halogen light source. Also note that $D(\lambda)$ is a light sensitivity characteristic of the light receiving section 48.

The "reference halogen light source" is a calibrated halogen light source whose absolute intensity (unit: $\mu W/cm^2$)

is known. For example, ε(λ) is a disclosed value supplied from a manufacturer of the reference halogen light source and E2(λ) is an actual measurement value that has been measured by using the spectral photometer 78.

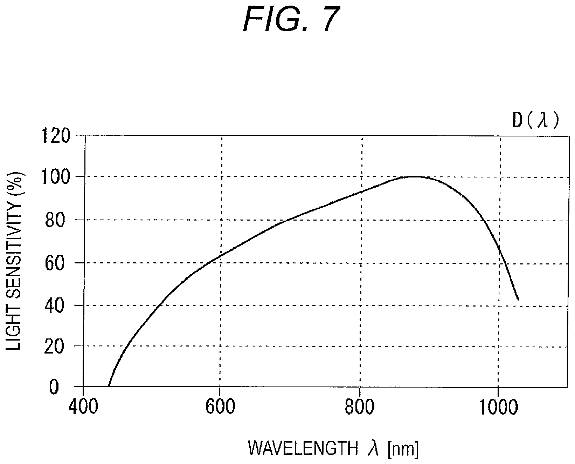

FIG. 7 is a graph illustrating an exemplary light sensitivity characteristic D(λ) of a PD device. In the graph, the horizontal axis represents a wavelength λ (unit: nm), and the vertical axis represents a light sensitivity (unit: %). Here, each value has been normalized by setting the maximum light sensitivity value to 1000. The light sensitivity characteristic D(λ) has a maximum value in the vicinity of the wavelength λ of 900 nm and a sensitivity wavelength range is approximately from 450 to 1100 nm.

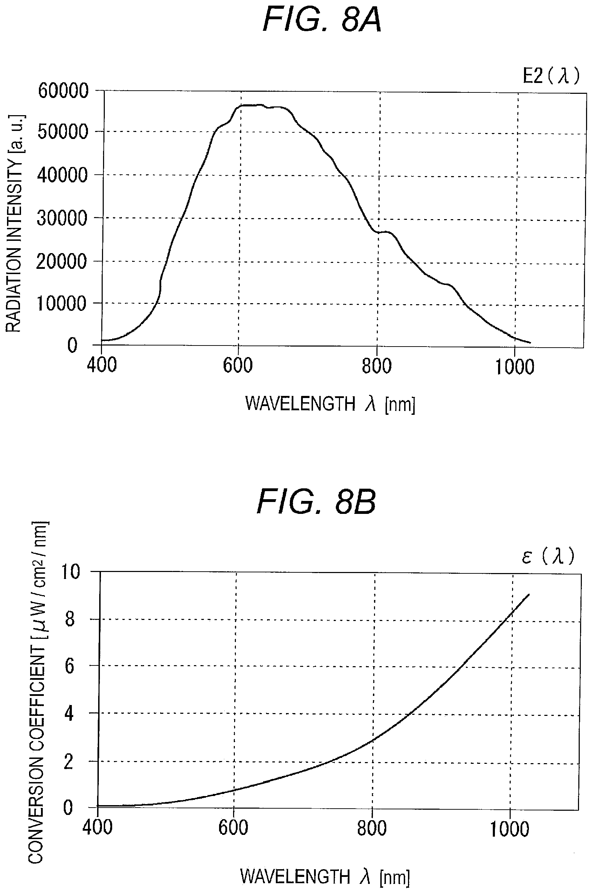

FIG. 8A is a graph illustrating an exemplary spectral radiation characteristic E2(λ) of the reference halogen light source. In the graph, the horizontal axis represents a wavelength λ (unit: nm), and the vertical axis represents a radiation intensity (unit: arbitrary). The spectral radiation characteristic E2(λ) has substantially the same spectral characteristic when compared with E1(λ) illustrated in FIG. 4B.

FIG. 8B is a graph illustrating an exemplary energy conversion coefficient ε(λ) of the reference halogen light source. In the graph, the horizontal axis represents a wavelength λ (unit: nm), and the vertical axis represents a conversion coefficient (unit: $\mu$W/cm$^2$/nm). The energy conversion coefficient ε(λ) has a characteristic to monotonically increase as the wavelength λ increases.

Among the integrands in the above-described equations (1) and (2), (Ri/E1) corresponds to a spectral reflectance on the i-th sample 26s. Also note that (ε·Er/E2) corresponds to the spectral characteristic of radiant energy in the individual light source 50r, and (ε·Es/E2) corresponds to the spectral characteristic of radiant energy in the reference light source 50s.

FIG. 9 is a graph illustrating an exemplary spectral detection characteristic of the test strip 26 and each of the samples 26s before color development. In the graph, the horizontal axis represents a wavelength λ (unit: nm), and the vertical axis represents current density (unit: $\mu$A/cm$^2$). The spectral detection characteristic corresponds to the integrand in equation (1) and is proportional to each of a spectral radiation characteristic Er, a spectral reflection characteristic Ri, and a light sensitivity characteristic D.

Consequently, by acquiring a spectral reflection characteristic across the wavelength range including the emission wavelength range of the reference light source 50s and the individual light source 50r, accuracy of estimating the detection value on each of the samples 26s is improved. Furthermore, by considering the spectral radiation characteristics Er and Es, each of the spectral reflection characteristics Ri, and the light sensitivity characteristic D all together, the spectral characteristic of the measurement optical system 40 can be expressed more precisely, making it possible to further improve accuracy of estimating the detection value on each of the samples 26s.

Meanwhile, absorbance (an exemplary individual detection value Xi) on the i-th (i = 1 to 5) sample 26s when the individual light source 50r is used is calculated based on the following equation (3).

$$Xi = 1024/\eta r(i), \quad \eta r(i) = Ir(i)/Ir(0) \quad ... \quad (3)$$

Also, absorbance (an exemplary reference detection value Yi) on the i-th sample 26s when the reference light source 50s is used is calculated based on the following equation (4).

$$Yi = 1024/\eta s(i), \quad \eta s(i) = Is(i)/Is(0) \quad ... \quad (4)$$

At step S7, the calibration curve determination section 98 determines a calibration curve corresponding to the individual light source 50r based on a relationship in each combination between the reference detection value and the individual detection value estimated respectively at steps S3 and S6. Here, the calibration curve indicates a characteristic curve by which the detection value on the test strip 26 obtained by the calibration target instrument 10c having the individual light source 50r mounted thereon is converted into the detection value when the reference light source 50s is used.

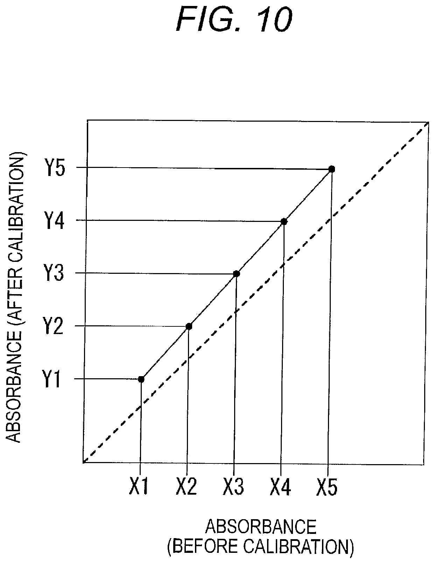

FIG. 10 is a graph illustrating an exemplary calibration curve. In the graph, the horizontal axis represents the individual detection value Xi, and the vertical axis represents the reference detection value Yi. The calibration curve determination section 98 determines a calibration curve, for example, by adapting each combination of the reference detection value Yi and the individual detection value Xi estimated for each of the samples 26s to a predetermined function (a linear function in the figure).

At step S8, the calibration operator mounts the individual light source 50r the calibration curve for which has been determined at step S7 to the calibration target instrument 10c.

At step S9, the calibration operator sets and inputs the calibration coefficient 64 (FIG. 2) determined at step S7 into the calibration target instrument 10c. For example, the calibration coefficient 64 may be input via the operation button 34 (FIG. 1) or may be downloaded from the calibration apparatus 74 (FIG. 3) through a communication method (not illustrated). Accordingly, the calibration coefficient 64 suitable for each blood glucose meter 10 is each stored in the memory 44.

At step S10, the calibration operator confirms whether calibration operations on all calibration target instruments 10c are completed. If not completed, the procedure goes back to step S4, and then, steps S4 to S9 are repeated sequentially. If completed, the calibration operations for the blood glucose meter 10 are finished. In this manner, the user can use the blood glucose meter 10 in a calibrated state.

[Quantitative Equation of Blood Glucose Level by Blood Glucose Meter 10]

Next, a quantification method for the blood glucose level by using the calibrated blood glucose meter 10, and more particularly, a computing operation at the component quantification section 60 (FIG. 2) will be described.

The component quantification section 60, prior to computing, reads the quantification coefficient 62 and the calibration coefficient 64 stored in the memory 44, and also acquires two values of the detection light quantities that have been output via the measurement optical system 40. The detection light quantity on the test strip 26 before color development is defined as Iw, and the detection light quantity on the test strip 26 after color development is defined as Ic. Normally, a ratio of the detection light quantities (Ic/Iw) on the test strip 26 between before and after color development is used as an optical reflectance for computation. In the present embodiment, however, calibration of the blood glucose meter 10 is performed by converting absorbance Ab on the individual light source 50r into absorbance Ab' on the reference light source 50s.

The optical reflectance $\eta$ on the individual light source 50r is calculated based on the following equation (5) by using the detection light quantities Iw and Ic.

$$\eta = Ic/Iw \ldots (5)$$

The absorbance Ab before calibration is calculated based on the following equation (6) by using the optical reflectance $\eta$.

$$Ab = 1024/\eta \ldots (6)$$

Here, the optical reflectance $\eta$ is within the range of $0 \leq \eta \leq 1$; therefore, the absorbance Ab is understandably a positive value, the minimum value thereof being 1024.

The absorbance Ab' after calibration is calculated based on the following equation (7) by using the absorbance Ab and any function F1 ($\cdot$). Here, the function F1 ($\cdot$) corresponds to the calibration curve illustrated in FIG. 10.

$$Ab' = F1(Ab) \ldots (7)$$

The blood glucose level BG (unit: mg/dl) is calculated based on the following equation (8) by using the absorbance Ab' and any function F2 (-) .

$$BG = F2(Ab') \ldots (8)$$

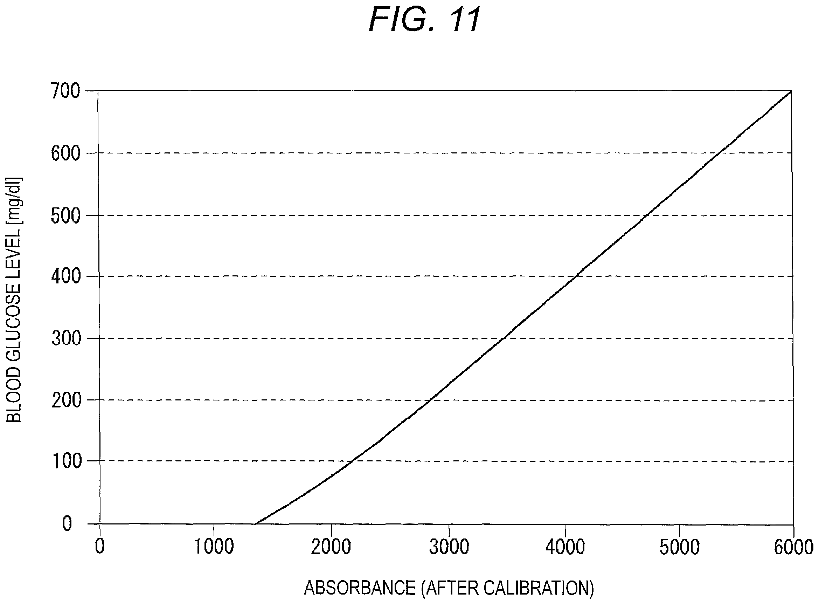

FIG. 11 is a graph illustrating an exemplary quantification curve. In the graph, the horizontal axis represents the absorbance (unit: none) after calibration and the vertical axis represents a blood glucose level (unit: mg/dl). In the graph, the blood glucose level (BG) is expressed by a cubic equation of absorbance (Ab'). In this case, the quantification coefficient 62 includes four coefficients for uniquely determining the shape of the function.

As stated above, the calibrated blood glucose meter 10 includes the memory 44 for storing the calibration coefficient 64 that specifies the calibration curve; and the component quantification section 60 that uses the calibration curve specified by the calibration coefficient 64 read from the memory 44 to perform conversion to a detection value on the test strip 26 and then quantify a component in a body fluid based on the quantitative equation corresponding to the reference light source 50s. Accordingly, there is no need to prepare a different quantitative equation (quantification coefficient 62) for each spectral characteristic of the individual light source 50r, making it possible to simplify the computation process for quantification.

Furthermore, methods for calculating the blood glucose level are not limited to equations (5) to (8) and it is obvious that various computation methods based on optical reflectance $\eta$ are applicable.

[Effects of Calibration Method]

As stated above, the calibration apparatus 74 calibrates the blood glucose meter 10 configured to measure a component in a body fluid based on the detection value related to the reflected light obtained by projecting light on the test strip 26 that contains a chromogenic reagent that reacts with the component in the body fluid.

The calibration apparatus 74 includes: the data acquisition section 94 (spectral characteristic acquisition section) configured to acquire the spectral radiation characteristic (Es) of the reference light source 50s that is a reference of the light source to be mounted on the blood glucose meter 10, the spectral radiation characteristic (Er) of the individual light source 50r that is the same type as the reference light source 50s and that is to be mounted on the calibration target instrument 10c, namely, the blood glucose meter 10 as a calibration target, and the spectral reflection characteristic (Ri) of the plurality of samples 26s prepared by using the test strip 26; the detection value estimation section 96 configured to estimate the reference detection value (Yi) on each of the samples 26s when the reference light source 50s is used based on each of the obtained spectral radiation characteristic (Es) and the spectral reflection characteristic (Ri), and also configured to estimate the individual detection value (Xi) on each of the samples 26s when the individual light source 50r is used based on each of the obtained spectral radiation characteristics (Er) and spectral reflection characteristics (Ri) of the individual light source 50r; and the calibration curve determination section 98 that determines a calibration curve by which the detection value on the test strip 26 obtained by the calibration target instrument 10c having the individual light source 50r mounted thereon is converted into the detection value when the reference light source 50s is used, based on a relationship in each combination between the reference detection value (Yi) and the individual detection value (Xi) estimated for each of the samples 26s.

The individual detection value (Xi) on each of the samples 26s when the individual light source 50r is used is each estimated based on the spectral radiation characteristic (Er) of the individual light source 50r that is to be mounted on the calibration target instrument 10c, and based on each of the spectral reflection characteristics (Ri) obtained. Therefore, the detection value can be obtained without performing a mounting operation of the individual light source 50r, measurement/exchange of the sample 26s, or the like. Furthermore, based on a relationship in each combination between the reference detection value (Yi) and the individual detection value (Xi) each estimated for each of the samples 26s, a calibration curve is determined. With the calibration curve, the detection value on the test strip 26 on the calibration target instrument 10c having the individual light source 50r mounted thereon is converted into the detection value when the reference light source 50s is used. Accordingly, a detection value when the reference light source 50s is used can always be obtained regardless of the spectral characteristic of the individual light source 50r. Consequently, accuracy of measuring a component in a body fluid can be ensured without performing measurement/exchange of the sample 26s for each instrument, or the like, even when an individual variation exists in the spectral characteristic of the light source.

The present invention is not limited to the embodiment described herein and may be appropriately modified without departing from the main scope of the invention as defined in the appended claims.

In the description of the above-described embodiment, blood is used as an example of the body fluid. The present invention, however, is not limited to blood. For example, the body fluid may be lymph fluid, spinal fluid, saliva or the like.

Furthermore, the component of the body fluid may be glucose (blood glucose level) and others such as cholesterol, uric acid, creatinine, lactic acid, hemoglobin (occult blood), various alcohols, various saccharides, various proteins, various vitamins, various inorganic ions including sodium, and endocrine-disrupting chemicals including polychlorinated biphenyl (PCB) and dioxin. Furthermore, it is possible to configure to acquire, as measurement results, quality of the component, separately from or additionally to the quantity of the component.

## Claims

1. A calibration method for calibrating a body fluid component measuring instrument (10) configured to measure a component in a body fluid based on a detection value related to reflected light obtained by projecting light on a test strip (26) containing a chromogenic reagent that reacts with the component in the body fluid, the calibration method comprising:

   an acquisition step of measuring and acquiring a spectral reflection characteristic (Ri) of each of a plurality of samples (26s) prepared by using the test strip (26) by attaching the body fluid having the component to each of the test strips (26);
   a reference estimation step of estimating, by integrating the spectral characteristics for each wavelength ($\lambda$), a reference detection value (Yi), that is, a detection value on each of the samples (26s) when a reference light source (50s) is used, based on a spectral radiation characteristic (Es) of the reference light source (50s) that is a reference for a light source (50) to be mounted on the body fluid component measuring instrument (10), and based on each of the spectral reflection characteristics (Ri) obtained;
an individual estimation step of estimating, by integrating the spectral characteristics for each wavelength ($\lambda$), an individual detection value (Xi), that is, a detection value on each of the samples (26s) when an individual light source (50r) is used, based on a spectral radiation characteristic (Er) of the individual light source (50r) that is the same type as the reference light source (50s) and that is to be mounted on a calibration target instrument (10c), namely, the body fluid component measuring instrument (10), and based on each of the spectral reflection characteristics (Ri) obtained; and
a determination step of determining a calibration curve by which the detection value obtained on the test strip (26) on the calibration target instrument (10c) having the individual light source (50r) mounted thereon is converted into the detection value when the reference light source (50s) is used, by fitting each combination of the reference detection value (Yi) and the individual detection value (Xi) estimated for each of the samples (26s) to a predetermined function.

2. The calibration method according to claim 1, wherein the acquisition step acquires the spectral reflection characteristic across a wavelength range including an emission wavelength range of the reference light source (50s) and of the individual light source (50r).

3. The calibration method according to claim 2, wherein

the body fluid component measuring instrument (10) measures the component in the body fluid by using, as the detection value, a ratio of detection light quantities on the test strip (26) between before and after color development;
the reference estimation step estimates each of the detection light quantities before and after color development by integrating, for each wavelength, a spectral characteristic each proportional to a spectral radiation characteristic of the reference light source (50s), each of the spectral reflection characteristics, and a light sensitivity characteristic of the calibration target instrument (10c); and
the individual estimation step estimates each of the detection light quantities before and after color development by integrating, for each wavelength, a spectral characteristic each proportional to a spectral radiation characteristic of the individual light source (50r), each of the spectral reflection characteristics, and the light sensitivity characteristic.

4. A calibration apparatus (74) configured to calibrate a body fluid component measuring instrument (10) configured to measure a component in a body fluid based on a detection value related to reflected light obtained by projecting light on a test strip (26) containing a chromogenic reagent that reacts with a component in the body fluid, the calibration apparatus (74) comprising:

a spectral characteristic acquisition section (94) configured to acquire a spectral radiation characteristic (Es) of a reference light source (50s) that is a reference for a light source (50) to be mounted on the body fluid component measuring instrument (10), a spectral radiation characteristic (Er) of an individual light source (50r) that is the same type as the reference light source (50s) and that is to be mounted on a calibration target instrument (1 0c), namely, the body fluid component measuring instrument (10), and a spectral reflection characteristic of a plurality of samples (26s) prepared by using the test strip (26) by attaching the body fluid having the component to each of the test strips (26);
a detection value estimation section (96) configured to estimate, by integrating the spectral characteristics for each wavelength ($\lambda$), a reference detection value (Yi), that is, a detection value on each of the samples (26s) when the reference light source (50s) is used, based on the spectral radiation characteristic (Es) and each of the spectral reflection characteristics of the reference light source (50s), each obtained by the spectral characteristic acquisition section (94), and also configured to estimate, by integrating the spectral characteristics for each wavelength ($\lambda$), an individual detection value (Xi), that is, a detection value on each of the samples (26s) when the individual light source (50r) is used, based on the spectral radiation characteristic (Er) and each of the spectral reflection characteristics of the individual light source (50r) each obtained by the spectral characteristic acquisition section (94); and
a calibration curve determination section (98) configured to determine a calibration curve by which a detection value on the test strip (26) obtained on the calibration target instrument (10c) having the individual light source (50r) mounted thereon is converted into the detection value when the reference light source (50s) is used, by fitting each combination of the reference detection value (Yi) and the individual detection value (Xi), estimated for each of the samples (26s) to a predetermined function by the detection value estimation section (96).

5. A calibration program configured to cause steps to be executed by a calibration apparatus (74) for calibrating a body fluid component measuring instrument (10) configured to measure a component in a body fluid based on a detection value related to reflected light obtained by projecting light on a test strip (26) containing a chromogenic reagent that reacts with the component in the body fluid, the steps comprising:

an acquisition step of acquiring a spectral reflection characteristic (Ri) of each of a plurality of samples (26s) prepared by using the test strip (26) by attaching the body fluid having the component to each of the test strips (26);

a reference estimation step of estimating, by integrating the spectral characteristics for each wavelength ($\lambda$), a reference detection value (Yi), that is, a detection value on each of the samples (26s) when a reference light source (50s) is used, based on the spectral radiation characteristic (Es) of the reference light source (50s) that is a reference for a light source (50) to be mounted on the body fluid component measuring instrument (10), and based on each of the spectral reflection characteristics (Ri) obtained;

an individual estimation step of estimating, by integrating the spectral characteristics for each wavelength ($\lambda$), an individual detection value (Xi), that is, a detection value on each of the samples (26s) when an individual light source (50r) is used, based on the spectral radiation characteristic (Er) of the individual light source (50r) that is the same type as the reference light source (50s) and that is to be mounted on a calibration target instrument (10c), namely, the body fluid component measuring instrument (10) as a calibration target, and based on each of the spectral reflection characteristics (Ri) obtained; and

a determination step of determining a calibration curve by which the detection value on the test strip (26) obtained on the calibration target instrument (10c) having the individual light source (50r) mounted thereon is converted into the detection value when the reference light source (50s) is used, by fitting each combination of the reference detection value (Yi) and the individual detection value (Xi) estimated for each of the samples (26s) to a predetermined function.

## Patentansprüche

1. Kalibrierungsverfahren zum Kalibrieren eines Messinstruments (10) für Körperflüssigkeitskomponenten, das so konfiguriert ist, dass es eine Komponente in einer Körperflüssigkeit auf der Grundlage eines Erfassungswertes misst, der mit reflektiertem Licht in Zusammenhang steht, das durch Projizieren von Licht auf einen Teststreifen (26), der ein chromogenes Reagenz enthält, das mit der Komponente in der Körperflüssigkeit reagiert, erhalten wird, wobei das Kalibrierungsverfahren umfasst:

einen Erfassungsschritt des Messens und Erfassens einer spektralen Reflexionscharakteristik (Ri) von jeder einer Vielzahl von Proben (26s), die unter Verwendung des Teststreifens (26) hergestellt wurden, indem die Körperflüssigkeit, welche die Komponente aufweist, auf jeden der Teststreifen (26) aufgebracht wird;

einen Schritt der Referenzschätzung zum Schätzen eines Referenz-Erfassungswertes (Yi), d. h., eines Erfassungswertes für jede der Proben (26s), wenn eine Referenzlichtquelle (50s) verwendet wird, durch Integrieren der spektralen Charakteristiken für jede Wellenlänge ($\lambda$) auf der Grundlage einer spektralen Strahlungscharakteristik (Es) der Referenzlichtquelle (50s), die eine Referenz für eine Lichtquelle (50) ist, die an dem Messinstrument (10) für Körperflüssigkeitskomponenten angebracht werden soll, und auf der Grundlage jeder der erhaltenen spektralen Reflexionscharakteristiken (Ri);

einen Schritt der individuellen Schätzung zum Schätzen eines individuellen Erfassungswertes (Xi), d. h., eines Erfassungswertes für jede der Proben (26s), wenn eine individuelle Lichtquelle (50r) verwendet wird, durch Integrieren der spektralen Charakteristiken für jede Wellenlänge (X) auf der Grundlage einer spektralen Strahlungscharakteristik (Er) der individuellen Lichtquelle (50r), die von dem gleichen Typ wie die Referenzlichtquelle (50s) ist und die an einem Kalibrierungszielinstrument (10c), nämlich dem Messinstrument (10) für Körperflüssigkeitskomponenten, angebracht werden soll, und auf der Grundlage jeder der erhaltenen spektralen Reflexionscharakteristiken (Ri); und

einen Bestimmungsschritt zum Bestimmen einer Kalibrierungskurve, durch welche der Erfassungswert, der von dem Teststreifen (26) auf dem Kalibrierungszielinstrument (10c), das die individuelle Lichtquelle (50r) daran angebracht aufweist, erhalten wird, in den Erfassungswert umgewandelt wird, wenn die Referenzlichtquelle (50s) verwendet wird, indem jede Kombination des Referenz-Erfassungswertes (Yi) und des individuellen Erfassungswertes (Xi), die für jede der Proben (26s) geschätzt werden, an eine vorbestimmte Funktion angepasst wird.

2. Kalibrierungsverfahren nach Anspruch 1, wobei der Erfassungsschritt die spektrale Reflexionscharakteristik über einen Wellenlängenbereich erfasst, der einen Emissionswellenlängenbereich von der Referenzlichtquelle (50s) und der individuellen Lichtquelle (50r) umfasst.

3.  Kalibrierungsverfahren nach Anspruch 2, wobei

    das Messinstrument (10) für Körperflüssigkeitskomponenten die Komponente in der Körperflüssigkeit misst, indem es als den Erfassungswert ein Verhältnis der Erfassungslichtmengen auf dem Teststreifen (26) zwischen vor und nach der Farbentwicklung verwendet;
    der Schritt der Referenzschätzung jede der Erfassungslichtmengen vor und nach der Farbentwicklung schätzt, indem er für jede Wellenlänge eine spektrale Charakteristik, die jeweils proportional zu einer spektralen Strahlungscharakteristik der Referenzlichtquelle (50s), zu jeder der spektralen Reflexionscharakteristiken und einer Lichtempfindlichkeitscharakteristik des Kalibrierungszielinstruments (10c) ist, integriert; und
    der Schritt der individuellen Schätzung jede der Erfassungslichtmengen vor und nach der Farbentwicklung schätzt, indem er für jede Wellenlänge eine spektrale Charakteristik, die jeweils proportional zu einer spektralen Strahlungscharakteristik der Referenzlichtquelle (50r), zu jeder der spektralen Reflexionscharakteristiken und einer Lichtempfindlichkeitscharakteristik ist, integriert.

4.  Kalibrierungsvorrichtung (74), die so konfiguriert ist, dass sie ein Messinstrument (10) für Körperflüssigkeitskomponenten kalibriert, das so konfiguriert ist, dass es eine Komponente in einer Körperflüssigkeit auf der Grundlage eines Erfassungswertes misst, der im Zusammenhang mit reflektiertem Licht steht, das durch Projizieren von Licht auf einen Teststreifen (26), der ein chromogenes Reagenz enthält, das mit der Komponente in der Körperflüssigkeit reagiert, erhalten wird, wobei die Kalibrierungsvorrichtung (74) umfasst:

    einen Abschnitt (94) zur Erfassung der spektralen Charakteristik, der so konfiguriert ist, dass er eine spektrale Strahlungscharakteristik (Es) einer Referenzlichtquelle (50s), die eine Referenz für eine Lichtquelle (50) ist, die an dem Messgerät (10) für Körperflüssigkeitskomponenten angebracht werden soll, eine spektrale Strahlungscharakteristik (Er) einer individuellen Lichtquelle (50r), die von dem gleichen Typ wie die Referenzlichtquelle (50s) ist und die an einem Kalibrierungszielinstrument (10c), nämlich dem Messinstrument (10) für Körperflüssigkeitskomponenten, angebracht werden soll, und eine spektrale Reflexionscharakteristik einer Vielzahl von Proben (26s) erfasst, die unter Verwendung des Teststreifens (26) hergestellt werden, indem die Körperflüssigkeit, welche die Komponente aufweist, auf jeden der Teststreifen (26) aufgebracht wird;
    einen Abschnitt (96) zum Schätzen des Erfassungswertes, der so konfiguriert ist, dass er durch Integrieren der spektralen Charakteristiken für jede Wellenlänge (λ) einen Referenz-Erfassungswert (Yi) schätzt, d. h., einen Erfassungswert für jede der Proben (26s), wenn die Referenz-Lichtquelle (50s) verwendet wird, auf der Grundlage der spektralen Strahlungscharakteristik (Es) und jeder der spektralen Reflexionscharakteristiken der Referenz-Lichtquelle (50s), die jeweils durch den Abschnitt (94) zur Erfassung der spektralen Charakteristik erhalten werden, und ebenfalls so konfiguriert ist, dass er durch Integrieren der spektralen Charakteristiken für jede Wellenlänge (λ) einen individuellen Erfassungswert (Xi) schätzt, d. h., einen Erfassungswert für jede der Proben (26s), wenn die individuelle Lichtquelle (50r) verwendet wird, auf der Grundlage der spektralen Strahlungscharakteristik (Er) und jeder der spektralen Reflexionscharakteristiken der individuellen Lichtquelle (50r), die jeweils durch den Abschnitt (94) zur Erfassung der spektralen Charakteristik erhalten werden; und
    einen Abschnitt (98) zum Bestimmen der Kalibrierungskurve, der so konfiguriert ist, dass er eine Kalibrierungskurve bestimmt, durch welche ein Erfassungswert, der von dem Teststreifen (26) auf dem Kalibrierungszielinstrument (10c), das die individuelle Lichtquelle (50r) daran angebracht aufweist, erhalten wird, in den Erfassungswert umgewandelt wird, wenn die Referenzlichtquelle (50s) verwendet wird, indem jede Kombination des Referenz-Erfassungswertes (Yi) und des individuellen Erfassungswertes (Xi), die für jede der Proben (26s) geschätzt werden, an eine vorbestimmte Funktion durch den Abschnitt (96) zum Schätzen des Erfassungswertes angepasst wird.

5.  Kalibrierungsprogramm, das so konfiguriert ist, dass es Schritte veranlasst, die von einer Kalibrierungsvorrichtung (74) ausgeführt werden, um ein Messinstrument (10) für Körperflüssigkeitskomponenten zu kalibrieren, welches so konfiguriert ist, dass es eine Komponente in einer Körperflüssigkeit auf der Grundlage eines Erfassungswertes misst, der mit reflektiertem Licht in Zusammenhang steht, das durch Projizieren von Licht auf einen Teststreifen (26), der ein chromogenes Reagenz enthält, das mit der Komponente in der Körperflüssigkeit reagiert, erhalten wird, wobei die Schritte umfassen:

    einen Erfassungsschritt zum Erfassen einer spektralen Reflexionscharakteristik (Ri) von jeder einer Vielzahl von Proben (26s), die unter Verwendung des Teststreifens (26) hergestellt wurden, indem die Körperflüssigkeit, welche die Komponente aufweist, auf jeden der Teststreifen (26) aufgebracht wird;

einen Schritt der Referenzschätzung zum Schätzen eines Referenz-Erfassungswertes (Yi), d. h., eines Erfassungswertes für jede der Proben (26s), wenn eine Referenzlichtquelle (50s) verwendet wird, durch Integrieren der spektralen Charakteristiken für jede Wellenlänge (λ) auf der Grundlage der spektralen Strahlungscharakteristik (Es) der Referenzlichtquelle (50s), die eine Referenz für eine Lichtquelle (50) ist, welche an dem Messinstrument (10) für Körperflüssigkeitskomponenten angebracht werden soll, und auf der Grundlage jeder der erhaltenen spektralen Reflexionscharakteristiken (Ri);

einen Schritt der individuellen Schätzung zum Schätzen eines individuellen Erfassungswertes (Xi), d. h., eines Erfassungswertes für jede der Proben (26s), wenn eine individuelle Lichtquelle (50r) verwendet wird, durch Integrieren der spektralen Charakteristiken für jede Wellenlänge (Ä) auf der Grundlage der spektralen Strahlungscharakteristik (Er) der individuellen Lichtquelle (50r), die von dem gleichen Typ wie die Referenzlichtquelle (50s) ist und die an einem Kalibrierungszielinstrument (10c), nämlich dem Messinstrument (10) für Körperflüssigkeitskomponenten, angebracht werden soll, und auf der Grundlage jeder der erhaltenen spektralen Reflexionscharakteristiken (Ri); und

einen Bestimmungsschritt zum Bestimmen einer Kalibrierungskurve, durch welche der Erfassungswert auf dem Teststreifen (26), der auf dem Kalibrierungszielinstrument (10c), das die individuelle Lichtquelle (50r) daran angebracht aufweist, erhalten wird, in den Erfassungswert umgewandelt wird, wenn die Referenzlichtquelle (50s) verwendet wird, indem jede Kombination des Referenz-Erfassungswertes (Yi) und des individuellen Erfassungswertes (Xi), die für jede der Proben (26s) geschätzt werden, an eine vorbestimmte Funktion angepasst wird.

## Revendications

1. Procédé d'étalonnage pour étalonner un instrument de mesure de composant de fluide corporel (10) configuré pour mesurer un composant dans un fluide corporel sur la base d'une valeur de détection associée à une lumière réfléchie obtenue par projection d'une lumière sur une bandelette réactive (26) contenant un réactif chromogène qui réagit avec le composant dans le fluide corporel, le procédé d'étalonnage comprenant :

une étape d'acquisition consistant à mesurer et acquérir une caractéristique spectrale de réflexion (Ri) de chacun d'une pluralité d'échantillons (26s) préparés à l'aide de la bandelette réactive (26) par fixation du fluide corporel ayant le composant à chacune des bandelettes réactives (26) ;

une étape d'estimation de référence consistant à estimer, en intégrant les caractéristiques spectrales pour chaque longueur d'onde (λ), une valeur de détection de référence (Yi), en d'autres termes, une valeur de détection sur chacun des échantillons (26s) lorsqu'une source de lumière de référence (50s) est utilisée, sur la base d'une caractéristique spectrale de rayonnement (Es) de la source de lumière de référence (50s) qui est une référence pour une source de lumière (50) à monter sur l'instrument de mesure de composant de fluide corporel (10), et sur la base de chacune des caractéristiques spectrales de réflexion (Ri) obtenues ;

une étape d'estimation individuelle consistant à estimer, en intégrant les caractéristiques spectrales pour chaque longueur d'onde (λ), une valeur de détection individuelle (Xi), en d'autres termes, une valeur de détection sur chacun des échantillons (26s) lorsqu'une source de lumière individuelle (50r) est utilisée, sur la base d'une caractéristique spectrale de rayonnement (Er) de la source de lumière individuelle (50r) qui est du même type que la source de lumière de référence (50s) et qui doit être montée sur un instrument cible d'étalonnage (10c), précisément, l'instrument de mesure de composant de fluide corporel (10) et sur la base de chacune des caractéristiques spectrales de réflexion (Ri) obtenues ; et

une étape de détermination consistant à déterminer une courbe d'étalonnage par laquelle la valeur de détection obtenue sur la bandelette réactive (26) sur l'instrument cible d'étalonnage (10c) sur lequel est montée la source de lumière individuelle (50r) est convertie en la valeur de détection lorsque la source de lumière de référence (50s) est utilisée, par ajustement de chaque combinaison de la valeur de détection de référence (Yi) et de la valeur de détection individuelle (Xi) estimée pour chacun des échantillons (26s) à une fonction prédéterminée.

2. Procédé d'étalonnage selon la revendication 1, dans lequel l'étape d'acquisition acquiert la caractéristique spectrale de réflexion sur une plage de longueurs d'onde comprenant une plage de longueur d'onde d'émission de la source de lumière de référence (50s) et de la source de lumière individuelle (50r).

3. Procédé d'étalonnage selon la revendication 2, dans lequel

l'instrument de mesure de composant de fluide corporel (10) mesure le composant dans le fluide corporel en utilisant, en tant que valeur de détection, un rapport de quantités de lumière de détection sur la bandelette réactive (26) entre avant et après le développement chromatique ;

l'étape d'estimation de référence estime chacune des quantités de lumière de détection avant et après le développement chromatique en intégrant, pour chaque longueur d'onde, une caractéristique spectrale chacune proportionnelle à une caractéristique spectrale de rayonnement de la source de lumière de référence (50s), à chacune des caractéristiques spectrales de réflexion, et à une caractéristique de sensibilité à la lumière de l'instrument cible d'étalonnage (10c) ; et

l'étape d'estimation individuelle estime chacune des quantités de lumière de détection avant et après le développement chromatique en intégrant, pour chaque longueur d'onde, une caractéristique spectrale chacune proportionnelle à une caractéristique spectrale de rayonnement de la source de lumière individuelle (50r), à chacune des caractéristiques spectrales de réflexion, et à la caractéristique de sensibilité à la lumière.

4. Appareil d'étalonnage (74) configuré pour étalonner un instrument de mesure de composant de fluide corporel (10) configuré pour mesurer un composant dans un fluide corporel sur la base d'une valeur de détection associée à une lumière réfléchie obtenue par projection d'une lumière sur une bandelette réactive (26) contenant un réactif chromogène qui réagit avec un composant dans le fluide biologique, l'appareil d'étalonnage (74) comprenant :

une section d'acquisition de caractéristiques spectrales (94) configurée pour acquérir une caractéristique spectrale de rayonnement (Es) d'une source de lumière de référence (50s) qui est une référence pour une source de lumière (50) à monter sur l'instrument de mesure de composant de fluide corporel (10), une caractéristique spectrale de rayonnement (Er) d'une source de lumière individuelle (50r) qui est le même type que la source de lumière de référence (50s) et qui doit être montée sur un instrument cible d'étalonnage (10c), précisément, l'instrument de mesure de composant de fluide corporel (10), et une caractéristique spectrale de réflexion d'une pluralité d'échantillons (26s) préparés en utilisant la bandelette réactive (26) par fixation du fluide corporel ayant le composant de chacune des bandelettes réactives (26) ;

une section d'estimation de valeur de détection (96) configurée pour estimer, par intégration des caractéristiques spectrales pour chaque longueur d'onde ($\lambda$), une valeur de détection de référence (Yi), en d'autres termes, une valeur de détection sur chacun des échantillons (26s) lorsque la source de lumière de référence (50s) est utilisée, sur la base de la caractéristique spectrale de rayonnement (Es) et de chacune des caractéristiques spectrales de réflexion de la source de lumière de référence (50s), chacune obtenues par la section d'acquisition de caractéristiques spectrales (94), et également configuré pour estimer, en intégrant les caractéristiques spectrales pour chaque longueur d'onde ($\lambda$), une valeur de détection individuelle (Xi), en d'autres termes, une valeur de détection sur chacun des échantillons (26s) lorsque la source de lumière individuelle (50r) est utilisée, sur la base de la caractéristique spectrale de rayonnement (Er) et chacune des caractéristiques spectrales de réflexion de la source de lumière individuelle (50r) chacune obtenues par la section d'acquisition de caractéristiques spectrales (94) ; et

une section de détermination de courbe d'étalonnage (98) configurée pour déterminer une courbe d'étalonnage par laquelle une valeur de détection sur la bandelette réactive (26) obtenue sur l'instrument cible d'étalonnage (10c) sur lequel est montée la source de lumière individuelle (50r) est convertie en la valeur de détection lorsque la source de lumière de référence (50s) est utilisée, par ajustement de chaque combinaison de la valeur de détection de référence (Yi) et de la valeur de détection individuelle (Xi), estimées pour chacun des échantillons (26s) à une fonction prédéterminée de la section d'estimation de valeur de détection (96).

5. Programme d'étalonnage configuré pour entraîner l'exécution des étapes par un appareil d'étalonnage (74) pour étalonner un instrument de mesure de composant de fluide corporel (10) configuré pour mesurer un composant dans un fluide corporel sur la base d'une valeur de détection associée à une lumière réfléchie obtenue par projection d'une lumière sur une bandelette réactive (26) contenant un réactif chromogène qui réagit avec le composant dans le fluide corporel, les étapes comprenant :

une étape d'acquisition consistant à acquérir une caractéristique spectrale de réflexion (Ri) de chacun d'une pluralité d'échantillons (26s) préparés à l'aide de la bandelette réactive (26) par fixation du fluide corporel ayant le composant à chacune des bandelettes réactives (26) ;

une étape d'estimation de référence consistant à estimer, par intégration des caractéristiques spectrales pour chaque longueur d'onde ($\lambda$), une valeur de détection de référence (Yi), en d'autres termes, une valeur de détection sur chacun des échantillons (26s) lorsqu'une source de lumière de référence (50s) est utilisée, sur la base de la caractéristique spectrale de rayonnement (Es) de la source de lumière de référence (50s) qui est une référence pour une source de lumière (50) à monter sur l'instrument de mesure de composant de fluide corporel (10), et sur la base de chacune des caractéristiques spectrales de réflexion (Ri) obtenues ;

une étape d'estimation individuelle consistant à estimer, en intégrant les caractéristiques spectrales pour chaque longueur d'onde (λ), une valeur de détection individuelle (Xi), en d'autres termes, une valeur de détection sur chacun des échantillons (26s) lorsqu'une source de lumière individuelle (50r) est utilisée, sur la base d'une caractéristique spectrale de rayonnement (Er) de la source de lumière individuelle (50r) qui est du même type que la source de lumière de référence (50s) et qui doit être montée sur un instrument cible d'étalonnage (10c), précisément, l'instrument de mesure de composant de fluide corporel (10) en tant que cible d'étalonnage, et sur la base de chacune des caractéristiques spectrales de réflexion (Ri) obtenues ; et

une étape de détermination consistant à déterminer une courbe d'étalonnage par laquelle la valeur de détection sur la bandelette réactive (26) obtenue sur l'instrument cible d'étalonnage (10c) sur lequel est montée la source de lumière individuelle (50r) est convertie en la valeur de détection lorsque la source de lumière de référence (50s) est utilisée, par ajustement de chaque combinaison de la valeur de détection de référence (Yi) et de la valeur de détection individuelle (Xi) estimées pour chacun des échantillons (26s) à une fonction prédéterminée.

FIG. 1

EP 2 950 083 B1

*FIG. 2*

EP 2 950 083 B1

## FIG. 3

CONTROL UNIT 88

DATA ACQUISITION SECTION 94

DETECTION VALUE ESTIMATION SECTION 96

CALIBRATION CURVE DETERMINATION SECTION 98

74

70

10c 77e 72

OPTICAL MEASUREMENT DEVICE

HALOGEN LIGHT SOURCE 76

SPECTRAL PHOTOMETER 78

26s (26)

77d

50r (50s)

COMMUNICATION I/F 80

INPUT UNIT 82

DISPLAY UNIT 84

STORAGE UNIT 86

SPECTRAL REFLECTION CHARACTERISTIC 90

DATA FOR ESTIMATION 91

REFERENCE DETECTION VALUE 92

EP 2 950 083 B1

## FIG. 4A

## FIG. 4B

*FIG. 5*

```
                    ┌─────────────────┐
                    │      START      │
                    └─────────────────┘
                             │
    ┌────────────────────────────────────────────┐
    │     MEASURE SPECTRAL REFLECTION            │ S1
    │     CHARACTERISTIC OF EACH SAMPLE          │
    └────────────────────────────────────────────┘
                             │
    ┌────────────────────────────────────────────┐
    │  ACQUIRE DATA FOR ESTIMATION OF DETECTION VALUE │ S2
    └────────────────────────────────────────────┘
                             │
    ┌────────────────────────────────────────────┐
    │  ESTIMATE DETECTION VALUE ON EACH SAMPLE WHEN │ S3
    │     REFERENCE LIGHT SOURCE IS USED          │
    └────────────────────────────────────────────┘
                             │
    ┌────────────────────────────────────────────┐
    │     PREPARE INDIVIDUAL LIGHT SOURCE        │ S4
    └────────────────────────────────────────────┘
                             │
    ┌────────────────────────────────────────────┐
    │  MEASURE SPECTRAL RADIATION CHARACTERISTIC OF │ S5
    │     INDIVIDUAL LIGHT SOURCE                 │
    └────────────────────────────────────────────┘
                             │
    ┌────────────────────────────────────────────┐
    │  ESTIMATE DETECTION VALUE ON EACH SAMPLE    │ S6
    │  WHEN INDIVIDUAL LIGHT SOURCE IS USED       │
    └────────────────────────────────────────────┘
                             │
    ┌────────────────────────────────────────────┐
    │     DETERMINE CALIBRATION CURVE            │ S7
    └────────────────────────────────────────────┘
                             │
    ┌────────────────────────────────────────────┐
    │     MOUNT INDIVIDUAL LIGHT SOURCE          │ S8
    └────────────────────────────────────────────┘
                             │
    ┌────────────────────────────────────────────┐
    │     SET AND INPUT CALIBRATION COEFFICIENT  │ S9
    └────────────────────────────────────────────┘
                             │
    ╱────────────────────────────────────────────╲  S10  NO
    │  CALIBRATION COMPLETED ON ALL INSTRUMENTS?  │
    ╲────────────────────────────────────────────╱
                             │ YES
                    ┌─────────────────┐
                    │       END       │
                    └─────────────────┘
```

FIG. 6

EP 2 950 083 B1

# FIG. 7

## FIG. 8A

## FIG. 8B

## FIG. 9

# FIG. 10

## FIG. 11

**EP 2 950 083 B1**

**REFERENCES CITED IN THE DESCRIPTION**

**Patent documents cited in the description**

- US 20050203353 A
- JP 9145615 A